# EUROPEAN PATENT APPLICATION

(11) **EP 4 282 996 A1**
(43) Date of publication of application: **29.11.2023**
(21) Application number: 22821838.4
(22) Date of filing: 12.04.2022
(51) Int. Cl.: C22B 3/08, C22B 47/00, C22B 3/00

(54) **SOLVENT EXTRACTION METHOD FOR SELECTIVELY RECOVERING NICKEL, COBALT AND MANGANESE**

(30) Priority: 08.04.2022 KR 20220043985
(71) Applicant: ECOPRO MATERIALS, CO., LTD., Pohang-si, Gyeongsangbuk-do 37948 (KR)
(72) Inventor: KIM, Dong Hee, Pohang-si, Gyeongsangbuk-do 37562 (KR); KIM, Young Hun, Pohang-si, Gyeongsangbuk-do 37560 (KR); KIM, Woo Jin, Pohang-si, Gyeongsangbuk-do 37581 (KR)
(74) Representative: Beck & Rössig European Patent Attorneys
(86) International application number: PCT/KR2022/005239
(87) International publication number: WO 2023/195565

(57) **Abstract**

Disclosed is a solvent extraction method for separation and recovery of nickel, cobalt, and manganese. More particularly, the solvent extraction method for recovery of nickel, cobalt, and manganese uses a starting material containing nickel (Ni), cobalt (Co), and manganese (Mn) is used. In the method, manganese (Mn) is recovered through a first solvent extraction step, nickel (Ni) is recovered through a second solvent extraction step, and cobalt (Co) is recovered through a third solvent extraction step. The three kinds of valuable metals are separately separated and recovered.

## Description

### Technical Field

The present invention relates to a solvent extraction method for separation and recovery of nickel, cobalt, and manganese. More particularly, the present invention relates to a solvent extraction method for recovery of nickel, cobalt, and manganese, the method recovering manganese (Mn) through a first solvent extraction step, nickel (Ni) through a second solvent extraction step, and cobalt (Co) through a third solvent extraction step, from a starting material containing nickel (Ni), cobalt (Co), and manganese (Mn). By the method, the three kinds of valuable metals can be separately recovered as respective monotype metals.

### Background Art

The lithium secondary battery industry has been playing a key role in implementing a wide range of applications including smartphones, tablet PCs, electric vehicles, and energy storage devices. Active research and development are being conducted on lithium secondary batteries that are primarily used in portable electronic devices, due to increasing concerns about the global environment and the depletion of fossil fuels, and in the future, the demand for lithium secondary batteries is expected to increase with the expanding market volume of electric vehicles.

Valuable metals used as cathode active materials of lithium secondary batteries, including nickel, cobalt, and manganese, can be recovered by a hydrometallurgical method.

However, the existing hydrometallurgical recovery methods for valuable metals such as nickel, cobalt, and manganese have limitations in that valuable metals contained in a raw material cannot be separately recovered as respective monotype metals but can be recovered as a combined form of two metals such as nickel/cobalt (Ni/Co) or nickel/manganese (Ni/Mn). That is, the three valuable metals cannot be separately recovered from a raw material.

In addition, the existing hydrometallurgical methods use a caustic method in which sodium hydroxide (NaOH), sodium carbonate (Na₂CO₃), or sodium sulfate (Na₂SO₄) is used to raise the pH in extraction processes. The sodium forms metal salts, and thus the process efficiency is lowered.

### Disclosure

### Technical Problem

The present invention has been made in view of the problems occurring in the related art, and an objective of the present invention is to provide a solvent extraction method for separation and recovery of nickel (Ni), cobalt (Co), and manganese (Mn). The method uses a hydrometallurgical process involving a first solvent extraction step, a second solvent extraction step, and a third solvent extraction step to separately recover each of three kinds of high-purity valuable metals, namely, nickel, cobalt, and manganese, from a starting material containing nickel, cobalt, and manganese.

The objectives of the present disclosure are not limited to the ones described above, and other objectives will be clearly understood by those skilled in the art from the following description.

### Technical Solution

To accomplish the above objective, there is provided a solvent extraction method for separation and recovery of nickel, cobalt, and manganese, the method including: a raw material leachate preparation step in which a starting material containing nickel (Ni), cobalt (Co), and manganese (Mn) is pre-processed to produce a raw material leachate that is iron free; a first solvent extraction step in which manganese (Mn) contained in the raw material leachate is separated as a manganese sulfate aqueous solution (MnSO₄); a second solvent extraction step in which nickel (Ni) contained in the raw material leachate from which manganese (Mn) has been removed is separated as a nickel sulfate aqueous solution (NiSO₄); and a third solvent extraction step in which cobalt (Co) contained in the raw material leachate from which manganese (Mn) has been removed is separated as a cobalt sulfate aqueous solution (CoSO₄), in which the nickel (Ni), the cobalt (Co), and the manganese (Mn) are separately recovered as respective metals.

In a preferred embodiment, the raw material leachate preparation step includes: a washing step in which the starting material containing nickel (Ni), cobalt (Co), and manganese (Mn) is washed with washing water; a first solid-liquid separation step in which the washed starting material is separated into a starting material cake and a filtrate; a leaching step in which sulfuric acid is added for reaction to the starting material cake; an iron precipitation step in which hydrogen peroxide and nickel hydroxide (Ni(OH)₂) are added for iron precipitate to a leachate produced through the leaching step; and a second solid-liquid separation step in which reaction products generated by the iron precipitation step are separated into a precipitate containing iron and the raw material leachate containing nickel, cobalt, and manganese.

In a preferred embodiment, the first solvent extraction step includes: a first preloading step in which a nickel sulfate aqueous solution (NiSO₄) is added to a first solvent to produce a manganese extracting solvent; a first-first extraction step in which the raw material leachate is added to the manganese extracting solvent to produce a first organic phase solution containing nickel (Ni), cobalt (Co), and manganese (Mn) and a first aqueous phase solution containing nickel (Ni) and cobalt (Co); a first-second extraction step in which the first organic phase solution is separated into a second organic phase solution containing manganese (Mn) and a second aqueous phase solution containing nickel (Ni) and cobalt (Co); and a first back extraction in which back extraction is performed to extract manganese remaining in the second organic phase solution and to produce a third organic phase solution not containing manganese (Mn) and a third aqueous phase solution containing manganese (Mn), and a manganese sulfate aqueous solution (MnSO₄) is obtained from the third aqueous phase solution.

In a preferred embodiment, the third organic phase solution undergoes an impurity removal process so that impurities contained in the third organic phase solution are removed, and the resulting impurity-free third organic phase solution is recycled as the first solvent used in the first preloading step.

In a preferred embodiment, the second solvent extraction step includes: a second preloading step in which a nickel sulfate aqueous solution (NiSO₄) is added to a second solvent to produce a nickel extracting solvent; a second extraction step in which the first aqueous phase solution is added to the nickel extracting solvent containing nickel (Ni) and cobalt (Co) to produce a fourth organic phase solution containing nickel (Ni) and cobalt (Co) and a fourth aqueous phase solution containing nickel (Ni), and a nickel sulfate aqueous solution (NiSO₄) is obtained from the fourth aqueous phase solution; and a second back extraction step in which back extraction is performed to extract nickel (Ni) and cobalt (Co) remaining in the fourth organic phase solution and to produce a fifth organic phase solution containing neither nickel (Ni) nor cobalt (Co) and a fifth aqueous phase solution containing nickel (Ni) and cobalt (Co) .

In a preferred embodiment, the fifth organic phase solution undergoes an impurity removal process, and the resulting impurity-free fifth organic phase solution is recycled as the second solvent used in the second preloading step.

In a preferred embodiment, the third solvent extraction step includes: a third extraction step in which the second aqueous phase solution containing nickel (Ni) and cobalt (Co) and the fifth aqueous phase solution containing nickel (Ni) and cobalt (Co) are added to the second solvent to produce a sixth organic phase solution containing cobalt (Co) and a sixth aqueous phase solution containing nickel (Ni); and a third back extraction step in which back extraction is performed to extract cobalt (Co) remaining in the sixth organic phase solution and to produce a seventh organic phase solution not containing cobalt (Co) and a seventh aqueous phase solution containing cobalt (Co), and a cobalt sulfate aqueous solution (CoSO₄) is obtained from the seventh aqueous phase solution.

In a preferred embodiment, the seventh organic phase solution undergoes an impurity removal process, and the resulting impurity-free seventh organic phase solution is recycled as the second solvent used in the third extraction step.

In a preferred embodiment, the first solvent is a phosphoric extractant.

In a preferred embodiment, the first-first extraction step may involve a reaction occurring in a pH range of 4.0 to 5.0.

In a preferred embodiment, the first-second extraction step may involve a reaction occurring in a pH range of 3.0 to 4.0.

In a preferred embodiment, the first back extraction step may involve a reaction occurring in a pH range of 1.0 to 2.0.

In a preferred embodiment, the second solvent may be a phosphinic extractant or a phosphonic extractant.

In a preferred embodiment, the second extraction step may involve a reaction occurring in a pH range of 5.0 to 6.0.

In a preferred embodiment, the second back extraction step may involve a reaction occurring in a pH range of 1.0 to 2.0.

In a preferred embodiment, the method may further include a nickel hydroxide preparation step in which a nickel-containing first raffinate generated through the first preloading step and a nickel-containing second raffinate generated through the second preloading step are recovered, and the recovered first and second raffinates are used to prepare nickel hydroxide (Ni(OH)₂).

In a preferred embodiment, the nickel hydroxide prepared through the nickel hydroxide preparation step may be used in the iron precipitation step.

In a preferred embodiment, the starting material may be a waste cathode material, a waste electrode material, a mixed hydroxide precipitate (MHP, MHP(OH)₂), a mixed carbonate precipitate (MCP, MeCO₃), a mixed sulfate precipitate (MSP, MeSO₄), a mixed sulfide precipitate (MSP, MeS), or black powder (BP).

In a preferred embodiment, the sixth aqueous phase solution obtained through the third extraction step may be used in the first preloading step and the second preloading step.

### Advantageous Effects

The present invention has the advantages described below.

According to the present invention, the solvent extraction method for separation and recovery of nickel, cobalt, and manganese has an advantage of separately recovering each of three kinds of valuable metals by performing a first solvent extraction step in which manganese (Mn) is recovered from a starting material containing nickel (Ni), cobalt (Co), and manganese (Mn), a second solvent extraction step in which nickel (Ni) is recovered, and a third solvent extraction step in which cobalt (Co) is recovered.

In addition, according to the present invention, since the solvent extraction method for separation and recovery of nickel, cobalt, and manganese includes a preloading process in which a sixth aqueous phase solution containing nickel (Ni) is added to a solvent, nickel transfers to an organic phase in the solvent, resulting in an increase in recovery rate of valuable metals. In addition, the pH of the solvent is raised prior to the solvent extraction step, the amount of a neutralizer used to raise the pH can be minimized. As a result, the deterioration of process efficiency attributable to the generation of metal salts can be prevented.

In addition, according to the present invention, in the solvent extraction method for separation and recovery of nickel, cobalt, and manganese, nickel hydroxide used in an iron precipitation step is prepared from waste liquid generated in reaction processes. Therefore, it is possible to minimize the loss of nickel discarded as contained in the waste liquid. In addition, since the method does not use sodium hydroxide or sodium carbonate as a neutralizer, the precipitation of impurities in the form of salts is prevented in the solvent extraction step, and thus the process efficiency of the solvent extraction step is increased.

### Description of Drawings

FIG. 1 is a step-by-step block diagram illustrating a solvent extraction method for separation and recovery of nickel, cobalt, and manganese, according to the present invention;
FIG. 2 is a schematic process flow diagram illustrating the flow of primary valuable metals in the solvent extraction method for separation and recovery of nickel, cobalt, and manganese, according to the present invention;
FIG. 3 is a step-by-step block diagram illustrating a raw material leachate preparation step involved in the solvent extraction method for separation and recovery of nickel, cobalt, and manganese, according to the present invention;
FIG. 4 is a step-by-step block diagram illustrating a first solvent extraction step involved in the solvent extraction method for separation and recovery of nickel, cobalt, and manganese, according to the present invention;
FIG. 5 is a step-by-step block diagram illustrating a second solvent extraction step involved in the solvent extraction method for separation and recovery of nickel, cobalt, and manganese, according to the present invention; and
FIG. 6 is a step-by-step block diagram illustrating a third solvent extraction step involved in the solvent extraction method for separation and recovery of nickel, cobalt, and manganese, according to the present invention.

### Best Mode

As the terms used to describe the present disclosure in the present disclosure, as many general terms as possible are selected. However, in certain cases, terms that are chosen by the inventors of the present disclosure may be used. In such cases, the meanings of the terms should be understood not simply by the name but by the detailed description of the invention.

Hereinafter, the technical aspects of the present disclosure will be described in detail with reference to the preferred embodiments illustrated in the accompanying drawings.

However, the present invention is not limited to the embodiments described herein and may be embodied in other forms. Like reference numerals refer to like elements throughout the description herein and the drawings.

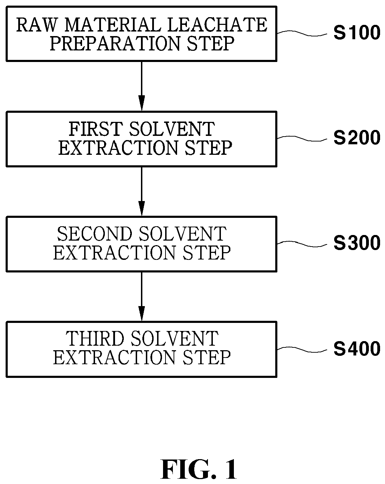

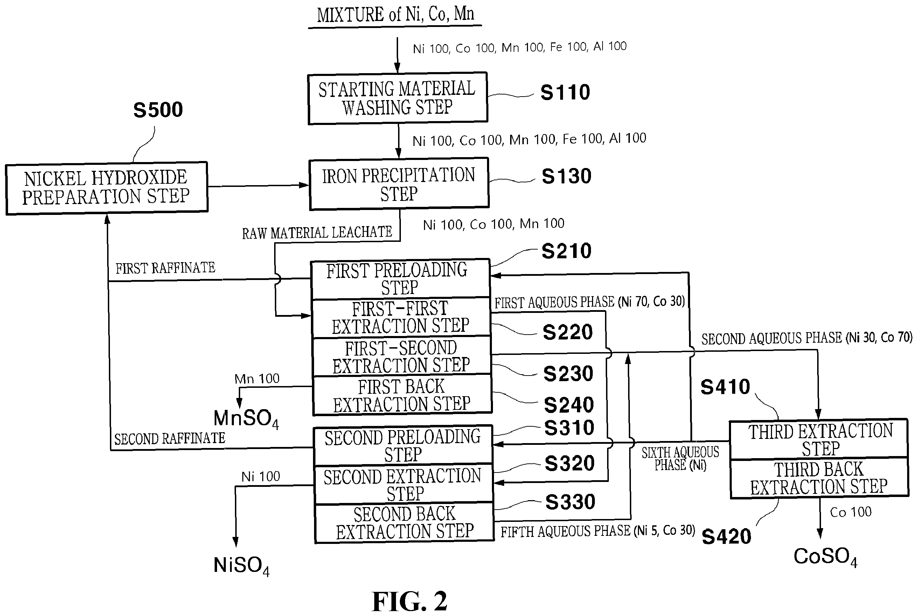

FIG. 1 is a step-by-step block diagram illustrating a solvent extraction method for separation and recovery of nickel, cobalt, and manganese, according to the present invention, step by step. FIG. 2 is a schematic process flow diagram illustrating the flow of primary valuable metals in the solvent extraction method for separation and recovery of nickel, cobalt, and manganese, according to the present invention.

Referring to FIGS. 1 and 2, according to one embodiment of the present invention, a solvent extraction method for separation and recovery of nickel, cobalt, and manganese includes a raw material leachate preparation step S100, a first solvent extraction step S200, a second solvent extraction step S300, and a third solvent extraction step S400. In the first solvent extraction step S200, manganese (Mn) is recovered from a start material containing cobalt (Co) and manganese (Mn). In the second solvent extraction step S300, nickel (Ni) is recovered. In the third extraction step S400, cobalt (Co) is recovered. Thus, the three kinds of valuable metals can be separately recovered.

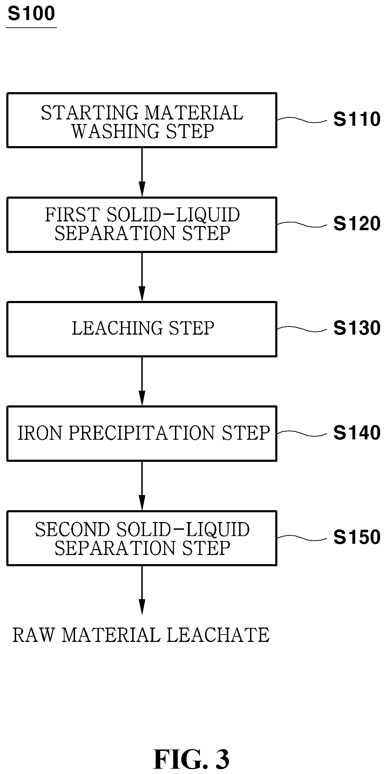

Referring to FIG. 3, in the raw material leachate preparation step S100, the starting material is pre-processed to remove iron components, thereby producing an iron-free raw material leachate. Specifically, this step includes a washing step S110 in which the starting material is pre-washed with washing water.

The starting material is not particularly limited if it contains nickel (Ni), cobalt (Co), and manganese (Mn). For example, the starting material may be a waste cathode material, a waste electrode material, a mixed hydroxide precipitate (MHP, Me(OH)₂), a mixed carbonate precipitate (MCP, MeCO₃), a mixed sulfate precipitate (MSP, MeSO₄), a mixed sulfide precipitate (MSP, MeS), or a black powder (BP), in which Me is Ni, Co, or Mn).

In the washing step S110, the volumetric ratio of the starting material to the washing water is preferably in a range of 1:1 to 1:5. In this step, impurities such as Ca, Mg, Al, Na, Li, and the like contained in the starting material are removed. In particular, Na is removed to the extent that the concentration of Na becomes 200 ppm or less.

Next, a first solid-liquid separation step S120 is performed to separate the starting material washed through the washing step S110 into a starting material cake and a filtrate.

In the first solid-liquid separation step S120, water may be added to wash off impurities remaining on the surface of the starting material cake after the filtration.

Next, a leaching step S130 is performed in which sulfuric acid is added for reaction to the starting material cake obtained through the first solid-liquid separation step S120.

In the leaching step S130, the equivalent ratio of total metals such as Ni, Co, Mn, Cu, Fe, and Al contained in the starting material cake to the added sulfuric acid is preferably in a range of 1:0.5 to 1:2.

The leaching step S130 may be divided into a first leaching step S131 and a second leaching step S132.

The first leaching step S131 is a pulping process of partially dissolving the starting material by adding sulfuric acid to the starting material cake.

In the first leaching step S131, about 65% of the total amount of the sulfuric acid prepared for the leaching step S130 is used. Reactivity control is performed to inhibit the generation of sulfur gas and to control the exothermic reaction.

The second leaching step S132 is performed to completely dissolve a primary leachate generated through the first leaching step S131 by adding hydrogen peroxide to the primary leachate.

In addition, preferably, the equivalent ratio of the metal components including manganese and cobalt contained in the primary leachate to the hydrogen peroxide is in a range of 1:0.5 to 1:2. In this step, the hydrogen peroxide reduces and leaches insoluble components including Mn⁴⁺ and Co³⁺.

In the second leaching step S132, about 35% of the total amount of sulfuric acid prepared for the leaching step S130 is used.

Next, an iron precipitation step S140 is performed in which hydrogen peroxide and nickel hydroxide (Ni(OH)₂) are added to the leachate generated through the leaching step S130 so that iron components can be precipitated.

In the iron precipitation step S140, the equivalent ratio of the iron components contained in the leachate to the hydrogen peroxide is in a range of 1:0.5 to 1:3, and the hydrogen peroxide oxidizes Fe, which is an impurity component, to trivalent iron (ferric), thereby inducing precipitation to goethite (FeOOH).

In addition, in the iron precipitation step S140, the nickel hydroxide raises the pH to a range of 3.5 to 6.5 so that impurities including Fe and Al can be precipitated.

On the other hand, the nickel hydroxide used in this step may be nickel hydroxide produced by recycling the raffinate generated through the first solvent extraction step S200 and the raffinate generated through the second solvent extraction step S300. Regarding this, a detailed description will be given below.

Next, a second solid-liquid separation step S150 is performed in which the reaction products formed through the iron precipitation step S140 are separated into a precipitate containing iron and a raw material leachate containing nickel, cobalt, and manganese.

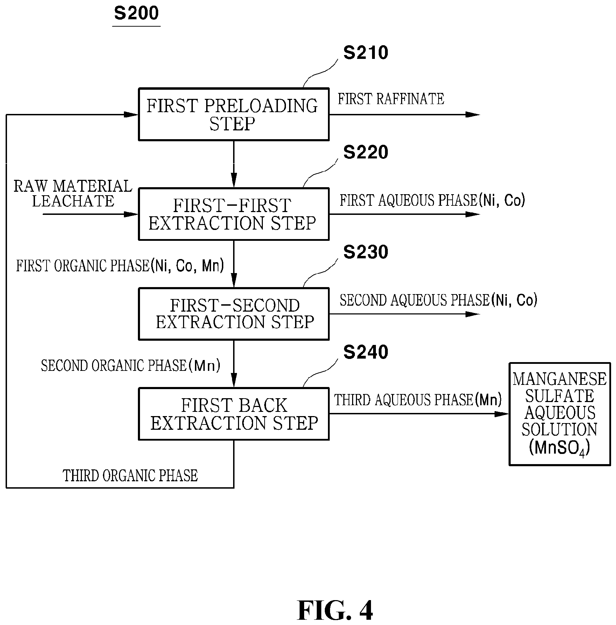

Referring to FIG. 4, the first solvent extraction step S200 is a process of separating manganese (Mn) from the raw material leachate as a manganese sulfate aqueous solution (MnSO₄). First, a first preloading step S210 is performed in which a nickel sulfate aqueous solution (NiSO₄) is added to a first solvent to produce a manganese extracting solvent.

Here, the nickel sulfate aqueous solution (NiSO₄) used in this step may be a nickel sulfate aqueous solution obtained through the separation and recovery performed in the second solvent extraction step S300 described below. In this step, the nickel component transfers to the organic phase in the first solvent, so that the recovery rate of valuable metals is increased. In addition, since the pH of the first solvent is raised prior to the solvent extraction step, the amount of a neutralizer used to raise the pH is minimized. The reduction in usage of a neutralizer prevents the generation of metal salts, thereby preventing the deterioration of process efficiency.

In addition, the first solvent may be a phosphoric extractant. The first solvent is not particularly limited to a specific material, and any material that exhibits pH-dependent behavior similar to that of nickel (Ni) or cobalt (Co) and which enables extraction of manganese (Mn) can be used as the first solvent. For example, extractants such as di-2-ethylhexyl phosphoric acid, sulfanyl-sulfanylidene-bis [(2R) -2,4,4-trimethylpentyl]-λ5-phosphane, Bis(5,8,12,15-tetraoxanonadecan-10-yl) phosphoric acid, Bis(1,3-diisobutoxypropan-2-yl) phosphoric acid, and the like may be used.

In the first preloading step S210, the pH of the manganese extracting solvent is preferably adjusted to be in a range of 5.0 to 5.5.

Next, a first-first extraction step S220 is performed in which the raw material leachate is added to the manganese extracting solvent so that the raw material leachate is separated into a first organic phase solution containing nickel (Ni), cobalt (Co), and manganese (Mn) and a first aqueous phase solution containing nickel (Ni) and cobalt (Co).

To this end, in the first-first extraction step S220, reactions occur in a pH range of 4.0 to 5.0.

Next, a first-second extraction step S230 is performed in which the first organic phase solution is separated into a second organic phase solution containing manganese (Mn) and a second aqueous phase solution containing nickel (Ni) and cobalt (Co).

In the first-second extraction step S230, reactions occur in a pH range of 3.0 to 4.0.

Next, a first back extraction step S240 is performed in which back extraction is performed to extract manganese (Mn) remaining in the second organic phase solution and to produce a third organic phase solution not containing manganese (Mn) and a third aqueous phase solution containing manganese (Mn), and a manganese sulfate aqueous solution (MnSO₄) is obtained from the third aqueous phase solution.

In the first back extraction step S240, reactions occur in a pH range of 1.0 to 2.0.

The third organic phase solution undergoes an impurity removal process so that impurities such as sodium (Na), iron (Fe), etc. contained in the third organic phase solution are removed, and the resulting impurity-free third organic phase solution is recycled as the first solvent used in the first preloading step.

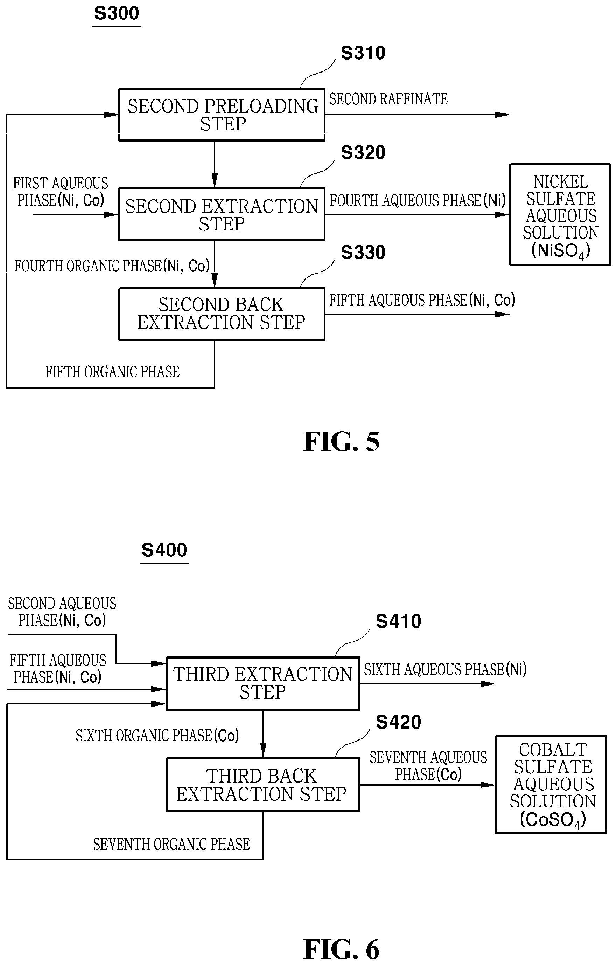

Referring to FIG. 5, the second solvent extraction step S300 is a process of separating nickel (Ni) contained in the raw material leachate from which manganese has been removed as a nickel sulfate aqueous solution (NiSO₄). The second solvent extraction step S300 includes a first preloading step S310 in which a nickel sulfate aqueous solution (NiSO₄) is added to a second solvent to produce a nickel extracting solvent.

Here, the nickel sulfate aqueous solution (NiSO₄) used in this step may be a nickel sulfate aqueous solution obtained through a second extraction step S320 described below. In this step, nickel transfers to the organic phase in the second solvent, thereby increasing the recovery rate of valuable metals. In addition, since the pH of the first solvent is raised prior to the solvent extraction step, the amount of a neutralizer used to raise the pH is minimized. The reduction in usage of a neutralizer prevents the generation of metal salts, and thus the deterioration of process efficiency is prevented.

In addition, the second solvent may be a phosphinic or phosphonic extractant. Any solvent that exhibits pH-dependent behavior similar to that of cobalt (Co) and manganese (Mn) and which can extract nickel (Ni) can be used, without limitations, as the second solvent. For example, an extractant such as bis-2,4,4-trimethylpentyl phosphinic acid, 2-ethylhexyl 2-ethylhexyphosphonic acid, or 2-ethylhexyl phosphonic acid mono-2-ethylhexyl ester may be used.

In the second preloading step S310, the pH of the solvent for extracting nickel and cobalt is preferably adjusted to be in a range of 6.0 to 6.5.

Next, a second extraction step S320 is performed in which the first aqueous phase solution containing nickel (Ni) and cobalt (Co) is added to the solvent for extracting nickel and cobalt so that a fourth organic phase solution containing nickel (Ni) and cobalt (Co) and a fourth aqueous phase solution containing nickel (Ni) are obtained. In addition, a nickel sulfate aqueous solution (NiSO₄) is obtained from the fourth aqueous phase solution.

To this end, in the second extraction step S320, reactions occur in a pH range of 5.0 to 6.0.

Next, a second back-extraction step S330 is performed in which back extraction is performed to extract nickel (Ni) and cobalt (Co) remaining in the fourth organic phase solution and to produce a fifth organic phase solution containing neither nickel (Ni) nor cobalt (Co) and a fifth aqueous phase solution containing nickel (Ni) and cobalt (Co).

In the second back extraction step S330, reactions occur in a pH range of 1.0 to 2.0.

The fifth organic phase solution may undergo an impurity removal process so that impurities such as sodium (Na), iron (Fe), etc. contained in the fifth organic phase solution can be removed, and the resulting impurity-free fifth organic phase solution is recycled as the second solvent used in the second preloading step.

Referring to FIG. 6, the third solvent extraction step S400 is a process of separating cobalt (Co) contained in the raw material leachate from which manganese (Mn) has been removed as a cobalt sulfate aqueous solution (CoSO₄). First, a third extraction step S410 is performed in which the second aqueous phase solution containing nickel (Ni) and cobalt (Co) and the fifth aqueous phase solution containing nickel (Ni) and cobalt (Co) are added to the second solvent to produce a sixth organic phase solution containing cobalt (Co) and a sixth aqueous phase solution containing nickel (Ni) .

To this end, in the third extraction step S410, reactions occur in a pH range of 4.0 to 5.0.

The sixth aqueous phase solution containing nickel (Ni), which is obtained through the separation performed the third extraction step S410, may be used in both the first preloading step S210 and the second preloading step S310.

Next, a third back extraction step S420 is performed in which back extraction is performed to extract cobalt (Co) remaining in the sixth organic phase solution so that a seventh organic phase solution not containing cobalt (Co) and a seventh aqueous phase solution containing cobalt (Co) are produced, and a cobalt sulfate aqueous solution (CoSO₄) is obtained from the seventh aqueous phase solution.

In the third back extraction step S420, reactions occur in a pH range of 2.0 to 3.0.

The seventh organic phase solution may undergo an impurity removal process so that impurities such as sodium (Na), iron (Fe), etc. contained in the seventh organic phase solution can be removed, and the resulting impurity-free seventh organic phase solution may be recycled as the second solvent used in the third extraction step S410.

As described above, by the solvent extraction method for separation and recovery of nickel, cobalt, and manganese according to the present invention, it is possible to separately recover three kinds of valuable metals as respective metals from a starting material containing nickel (Ni), cobalt (Co), and manganese (Mn). Specifically, manganese (Mn) contained in the raw material leachate obtained from the starting material is recovered as a manganese sulfate aqueous solution (MnSO₄) through the first solvent extraction step, nickel (Ni) contained in the raw material leachate is recovered as a nickel sulfate aqueous solution (NiSO₄) through the second solvent extraction step, and cobalt contained in the raw material leachate is recovered as a cobalt sulfate aqueous solution (CoSO₄) through the third solvent extraction step. Therefore, all the three kinds of valuable metals can be separately recovered as respective monotype metals.

In addition, the solvent extraction method for separation and recovery of nickel, cobalt, and manganese may further include a nickel hydroxide preparation step S500.

The nickel hydroxide preparation step S500 is a process of recycling by-products generated during the reaction processes to produce nickel hydroxide. The nickel hydroxide preparation step S500 includes a nickel hydroxide precipitation step, a third solid-liquid separation step, and a washing step that are sequentially performed in this order.

Here, the nickel hydroxide precipitation step is performed to completely precipitate nickel contained a first raffinate generated through the first preloading step and a second raffinate generated through the second preloading step. For the precipitation of nickel hydroxide, 10% sodium hydroxide (NaOH) is added, and the pH of the resulting solution is adjusted to be in a range of 7.0 to 9.0.

Next, the third solid-liquid separation step is performed in which reaction products generated in the nickel hydroxide precipitation step are separated into a nickel hydroxide precipitate and a filtrate.

Next, the washing step is performed in which the obtained nickel hydroxide precipitate is then washed with water so that residual sodium can be removed. As a result, nickel hydroxide is obtained.

The nickel hydroxide (Ni(OH)₂) prepared through the nickel hydroxide preparation step S500 as described above will be used in the iron precipitation step S140.

In the solvent extraction method for separation and recovery of nickel, cobalt, and manganese, according to the present invention, nickel hydroxide used in the iron precipitation step is prepared by recycling waste liquid generated during the reaction processes. Therefore, it is possible to minimize the loss of nickel discarded as contained in the waste liquid. In addition, since sodium hydroxide or sodium carbonate is not used as a neutralizer, the precipitation of salts of impurities is prevented during the solvent extraction step, and thus the process efficiency of the solvent extraction step increases.

### Example

### Example 1 (Raw Material Leachate Preparation Step)

100 parts by weight of a starting material containing nickel (Ni), cobalt (Co), and manganese (Mn) was washed with 100 parts by weight of washing water, followed by solid-liquid separation to obtain a solid phase that is washed.

Here, the composition of the starting material is as shown in Table 1 below.

**[Table 1]**

| Raw material | Content (%) |
|---|---|
| Ni | 35 to 45 |
| Co | 1 to 5 |
| Mn | 1 to 5 |
| Cu | 0 to 0.2 |
| Fe | 0.1 to 0.5 |
| Zn | 0 to 0.5 |
| Mg | 0 to 0.5 |
| Ca | 0 to 0.1 |
| Al | 0.1 to 0.5 |
| Na | 0 to 0.5 |
| Water content | 45 to 55 |

Next, 160 parts by weight of water and 30 parts by weight of 98% sulfuric acid were added to the washed solid phase. In this step, the equivalent ratio of total metals including Ni, Co, Mn, Cu, Fe, and Al contained in the washed solid phase to the sulfuric acid was 1:1.1. Next, 290 parts by weight of a primary leachate was reacted with 15 parts by weight of 98% sulfuric acid and 3 parts by weight of 32% hydrogen peroxide to produce a secondary leachate. Next, 300 parts by weight of the secondary leachate was reacted with 1.5 parts by weight of 32% hydrogen peroxide and 13 parts by weight of nickel hydroxide (Ni(OH)₂) so that iron components were precipitated.

The resulting reaction products were separated into a precipitate containing iron and a raw material leachate containing nickel, cobalt, and manganese.

### Example 2 (Second Solvent Extraction Step)

As a first solvent, di-2-ethylhexyl phosphoric acid was used. A nickel sulfate aqueous solution (NiSO₄) was added to the first solvent to produce a manganese extracting solvent having a pH in a range 5.0 to 5.5.

In this step, the ratio of the first solvent to the nickel sulfate aqueous solution (NiSO₄) was 3.5, and a first raffinate containing a trace amount of nickel (Ni) was generated.

Next, the raw material leachate containing nickel, cobalt, and manganese, which was obtained as in Example 1, was added to the manganese extracting solvent and reacted at a pH in a range of 4.0 to 5.0, so that a first organic phase solution containing nickel (Ni), cobalt (Co), and manganese (Mn) and a first aqueous phase solution containing nickel (Ni) and cobalt (Co) were produced.

Referring to FIG. 2, metal components were contained at different concentrations in the starting material which was a mixture containing nickel, cobalt, and manganese. The initial amount of each of the metal components that were present in the starting material was assumed to be 100 parts by weight. Under the assumption, the relative amount of each of the metal component with respect to their initial amount and the transfer of each metal component were observed for each process.

Here, the first aqueous phase solution contained 70 parts by weight of nickel (Ni) and 30 parts by weight of cobalt (Co).

The first organic phase solution was then adjusted to have a pH of 3.5, so that a second organic phase solution containing manganese (Mn) and a second aqueous phase solution containing nickel (Ni) and cobalt (Co) were produced. Here, the second aqueous phase solution contained 30 parts by weight of nickel (Ni) and 70 parts by weight of cobalt (Co).

Next, back extraction was performed to extract manganese (Mn) remaining in the second organic phase solution by adjusting the pH of the second organic phase solution to fall within a range of 1.0 to 1.5. By this process, the second organic phase solution was separated into a third organic phase solution not containing manganese (Mn) and a third aqueous phase solution containing manganese (Mn). A manganese sulfate aqueous solution (MnSO₄) was then obtained from the third aqueous phase solution.

Here, the composition of the manganese sulfate aqueous solution (MnSO₄) was as shown in Table 2 below.

**[Table 2]**

| Mn Sol (g/L) | |
|---|---|
| Ni | < 0.1 |
| Co | 1 to 5 |
| Mn | 110 to 120 |
| Cu | 5 to 10 |
| Fe | < 0.01 |
| Zn | 5 to 10 |
| Mg | 0.1 to 1 |
| Ca | 0.1 to 1 |
| Al | < 0.5 |
| Na | < 0.001 |

Next, back extraction was performed to extract impurities (Na, Fe, etc.) contained in the third organic phase solution by adjusting the pH of the third organic phase solution to be less than 1.0. The third organic phase solution from which the impurities had been removed was recycled as the first solvent used in the first preloading step.

### Example 3 (Second Solvent Extraction Step)

As a second solvent, bis-(2,4,4-trimethylpentyl) phosphinic acid was used. A nickel sulfate aqueous solution (NiSO₄) was added for reaction to the second solvent to produce a nickel extracting solvent having a pH in a range 6.0 to 6.5.

In this step, the ratio of the second solvent to the nickel sulfate aqueous solution (NiSO₄) was 4.0, and a second raffinate containing a trace amount of nickel (Ni) was generated.

Next, the first aqueous phase solution containing nickel (Ni) and cobalt (Co) was added to the nickel extracting solvent, and reactions were performed at a pH in a range of 5.0 to 6.0. As a result, a fourth organic phase solution containing nickel (Ni) and cobalt (Co) and a fourth aqueous phase solution containing nickel (Ni) were obtained. In addition, a nickel sulfate aqueous solution (NiSO₄) was obtained from the fourth aqueous phase solution.

Here, the composition of the nickel sulfate aqueous solution (NiSO₄) is as shown in Table 3 below.

**[Table 3]**

| Ni Sol (g/L) | |
|---|---|
| Ni | 100 to 110 |
| Co | < 0.01 |
| Mn | < 0.01 |
| Cu | < 0.001 |
| Fe | < 0.001 |
| Zn | < 0.001 |
| Mg | < 0.01 |
| Ca | < 0.001 |
| Al | < 0.001 |
| Na | 0.1 to 0.5 |

Next, back extraction was performed by adjusting the pH of the fourth organic phase solution to be in a range of 1.0 to 2.0, so that a fifth organic phase solution containing neither nickel (Ni) nor cobalt (Co) and a fifth aqueous phase solution containing nickel (Ni) and cobalt (Co) were obtained.

Here, the fifth aqueous phase solution contained 5 parts by weight of nickel (Ni) and 30 parts by weight of cobalt (Co).

Next, back extraction was performed to extract impurities (Na, Fe, etc.) contained in the fifth organic phase solution by adjusting the pH of the fifth organic phase solution to be less than 1.0. The fifth organic phase solution from which the impurities had been removed was recycled as the second solvent used in the second preloading step.

### Example 4 (Third Solvent Extraction Step)

Bis-(2,4,4-trimethylpentyl) phosphinic acid was prepared as the second solvent. The second aqueous phase solution containing nickel (Ni) and cobalt (Co) and the fifth aqueous phase solution containing nickel (Ni) and cobalt (Co) were added to the second solvent, and the pH of the resulting solution was maintained in a range of 4.0 to 5.0. Thus, a sixth organic phase solution containing cobalt (Co) and a sixth aqueous phase solution containing nickel (Ni) were obtained.

Here, the sixth aqueous phase solution contained 30 parts by weight of nickel (Ni).

Next, back extraction was performed to extract cobalt (Co) remaining in the sixth organic phase solution by adjusting the pH of the sixth organic phase solution to fall within a range of 2.0 to 3.0. By this process, the sixth organic phase solution was separated into a seventh organic phase solution not containing cobalt (Co) and a seventh aqueous phase solution containing cobalt (Co). Next, a cobalt sulfate aqueous solution (CoSO₄) was obtained from the seventh aqueous phase solution.

Here, the composition of the cobalt sulfate aqueous solution (CoSO₄) was as shown in Table 4 below.

**[Table 4]**

| Co Sol (g/L) | |
|---|---|
| Ni | < 0.01 |
| Co | 120 - 130 |
| Mn | < 0.001 |
| Cu | < 0.001 |
| Fe | < 0.001 |
| Zn | < 0.001 |
| Mg | < 0.001 |
| Ca | < 0.001 |
| Al | < 0.001 |
| Na | < 0.01 |

Next, back extraction was performed to extract impurities (Na, Fe, etc.) contained in the seventh organic phase solution by adjusting the pH of the seventh organic phase solution to be less than 1.0. The seventh organic phase solution from which the impurities had been removed was recycled as the second solvent used in the third extraction step S410.

### Example 5 (Nickel Hydroxide Preparation Step)

The pH was adjusted to 8.0 by adding 35 parts by weight of 10% NaOH to the nickel-containing first raffinate produced through the first preloading step S210 as in Example 2 and the nickel-containing Second raffinate produced through the second preloading step S310 as in Example 3. This causes the precipitation of nickel hydroxide in the waste liquid. Next, the nickel hydroxide precipitate was then collected, followed by washing with 8.5 parts by weight of washing water for the removal of residual sodium. Thus, nickel hydroxide (Ni(OH)₂) was obtained. The obtained nickel hydroxide (Ni(OH)₂) was used as a neutralizer in the iron precipitation step S140 as in Example 1.

As described above, with the use of the solvent extraction method for separation and recovery of nickel, cobalt, and manganese, according to the present invention, it is possible to separately recover three kinds of valuable monotype metals including nickel (Ni), cobalt (Co), and manganese (Mn) through the raw material leachate preparation step S100, the first solvent extraction step S200, the second solvent extraction step S300, and the third solvent extraction step S400.

Moreover, due to the presence of the first and second preloading steps S210 and S310 in which the nickel aqueous solution recovered by separation during the reaction processes is added to the solvent, nickel transfers to the organic phase in the solvent, thereby increasing the recovery rate of valuable metals. In addition, since the nickel aqueous solution raises the pH of the solvent, the usage of a neutralizer that is used to raise the pH is minimized, and thus the deterioration of the process efficiency attributable to the generation of metal salts can be prevented.

In addition, since by-products such as the first raffinate and the second raffinate generated during the reaction processes are used to prepare nickel hydroxide, and the prepared nickel hydroxide is used as a neutralizer in the iron precipitation step S140, the loss of nickel components discarded as contained in waste liquid is minimized, and sodium hydroxide (NaOH), sodium carbonate (Na₂ CO₃), or sodium sulfate (Na₂ SO₄) needs not be used as a neutralizer. Since such sodium compounds are not used, impurities may not precipitate in the form of salts, resulting in an increase in the process efficiency of the solvent extraction step.

Although the present invention has been described with reference to the preferred example, the ordinarily skilled in the art will appreciate that the present invention is not limited to the example described above and can be diversely changed and modified without departing from the scope of the spirit of the present invention.

### Industrial Applicability

The nickel sulfate aqueous solution (NiSO₄), the cobalt sulfate aqueous solution (CoSO₄), and the manganese sulfate aqueous solution (MnSO₄) recovered by the method of the present invention may be used as the core materials for the preparation of a cathode electrode material for a lithium secondary battery.

## Claims

1. A solvent extraction method for separation and recovery of nickel, cobalt, and manganese, the method comprising:
a raw material leachate preparation step in which a starting material containing nickel (Ni), cobalt (Co), and manganese (Mn) is pre-processed to prepare a raw material leachate from which iron components have been removed;
a first solvent extraction step in which manganese (Mn) contained in the raw material leachate is separated as a manganese sulfate aqueous solution (MnSO₄);
a second solvent extraction step in which nickel (Ni) contained in the raw material leachate from which manganese have been removed is separated as a nickel sulfate solution (NiSO₄); and
a third solvent extraction step in which cobalt (Co) contained in the raw material leachate from which manganese have been removed is separated as a cobalt sulfate aqueous solution (CoSO₄),
wherein the nickel (Ni), the cobalt (Co), and the manganese (Mn) are separately separated and recovered.

2. The method of claim 1, wherein the raw material leachate preparation step comprises:
a washing step in which the starting material containing nickel (Ni), cobalt (Co), and manganese (Mn) is washed with washing water;
a first solid-liquid separation step in which the washed starting material is separated into a starting material case and a filtrate;
a leaching step in which sulfuric acid is added to the raw material cake for reaction;
an iron precipitation step in which hydrogen peroxide and nickel hydroxide (Ni(OH)₂) are added to a leachate formed through the leaching step for iron precipitation; and
a second solid-liquid separation step in which reaction products generated through the iron precipitation step are separated into of a precipitate containing iron and a raw material leachate containing nickel, cobalt, and manganese.

3. The method of claim 1, wherein the first solvent extraction step comprises:
a first preloading step in which a nickel sulfate aqueous solution (NiSO₄) is added to a first solvent to produce a manganese extracting solvent;
a first-first extraction step in which the raw material leachate is added to the manganese extracting solvent so that the raw material leachate is separated into a first organic phase solution containing nickel (Ni), cobalt (Co), and manganese (Mn) and a first aqueous phase solution containing nickel (Ni) and cobalt (Co) ;
a first-second extraction step in which the first organic phase solution is separated into a second organic phase solution containing manganese (Mn) and a second aqueous phase solution containing nickel (Ni) and cobalt (Co); and
a first back extraction step in which back extraction is performed to extract manganese (Mn) remaining in the second organic phase solution and to produce a third organic phase solution not containing manganese (Mn) and a third aqueous phase solution containing manganese (Mn) are produced, and a manganese sulfate aqueous solution (MnSO₄) is obtained from the third aqueous phase solution.

4. The method of claim 3, wherein the third organic phase solution undergoes an impurity removal process so that impurities contained in the third organic phase solution are removed, and the resulting impurity-free third organic phase solution is recycled as the first solvent used in the first preloading step.

5. The method of claim 3, wherein the second solvent extraction step comprises:
a second preloading step in which a nickel sulfate aqueous solution (NiSO₄) is added to a second solvent to produce a nickel extracting solvent;
a second extraction step in which the first aqueous phase solution containing nickel (Ni) and cobalt (Co) is added to the nickel extracting solvent so that a fourth organic phase solution containing nickel (Ni) and cobalt (Co) and a fourth aqueous phase solution containing nickel (Ni) are obtained, and a nickel sulfate aqueous solution (NiSO₄) is obtained from the fourth aqueous phase solution; and
a second back extraction step in which back extraction is performed to extract nickel (Ni) and cobalt (Co) remaining in the fourth organic phase solution and to produce a fifth organic phase solution containing neither nickel (Ni) nor cobalt (Co) and a fifth aqueous phase solution containing nickel (Ni) and cobalt (Co) are obtained.

6. The method of claim 5, wherein the fifth organic phase solution undergoes an impurity removal process, and the fifth organic phase solution from which impurities have been removed is recycled as the second solvent used in the second preloading step.

7. The method of claim 5, wherein the third solvent extraction step comprises:
a third extraction step in which the second aqueous phase solution containing nickel (Ni) and cobalt (Co) and the fifth aqueous phase solution containing nickel (Ni) and cobalt (Co) are added to the second solvent to produce a sixth organic phase solution containing cobalt (Co) and a sixth aqueous phase solution containing nickel (Ni); and
a third back extraction step in which back extraction is performed to extract cobalt (Co) remaining in the sixth organic phase solution and to produce a seventh organic phase solution not containing cobalt (Co) and a seventh aqueous phase solution containing cobalt (Co), and a cobalt sulfate aqueous solution (CoSO₄) is obtained from the seventh aqueous phase solution.

8. The method of claim 7, wherein the seventh organic phase solution undergoes an impurity removal process, and the seventh organic phase solution from which impurities have been removed is recycled as the second solvent used in the third extraction step.

9. The method of claim 3, wherein the first solvent is a phosphoric extractant.

10. The method of claim 3, wherein in the first-first extraction step, a reaction occurs in a pH range of 4.0 to 5.0.

11. The method of claim 10, wherein in the first-second extraction step, a reaction occurs in a pH range of 3.0 to 4.0.

12. The method of claim 11, wherein in the first back extraction step, a reaction occurs in a pH range of 1.0 to 2.0.

13. The method of claim 5, wherein the second solvent is a phosphinic extractant or a phosphonic extractant.

14. The method of claim 5, wherein in the second extraction step, a reaction occurs in a pH range of 5.0 to 6.0.

15. The method of claim 14, wherein in the second back extraction step, a reaction occurs in a pH range of 1.0 to 2.0.

16. The method of claim 5, wherein a nickel-containing first raffinate generated through the first preloading step and a nickel-containing second raffinate generated through the second preloading step are recovered, and the first raffinate and the second raffinate are used to prepare nickel hydroxide (Ni(OH)₂).

17. The method of claim 16, wherein the nickel hydroxide prepared through the nickel hydroxide preparation step is used in the iron precipitation step.

18. The method of claim 2, wherein the starting material is a waste cathode material, a waste electrode material, a mixed hydroxide precipitate (MHP, MHP(OH)₂), a mixed carbonate precipitate (MCP, MeCO₃), a mixed sulfate precipitate (MSP, MeSO₄), a mixed sulfide precipitate (MSP, MeS), or black powder (BP), wherein Me is Ni, Co, or Mn.

19. The method of claim 7, wherein the sixth aqueous phase solution obtained through the third extraction step is used in the first preloading step and the second preloading step.
